# EUROPÄISCHE PATENTSCHRIFT

(11) **EP 2 715 152 B1**
(45) Veröffentlichungstag und Bekanntmachung des Hinweises auf die Patenterteilung: **30.11.2016**
(21) Anmeldenummer: 12732512.4
(22) Anmeldetag: 10.05.2012
(51) Int. Cl.: F15B 15/28, G01D 5/22

(54) **KOLBEN-ZYLINDER-ANORDNUNG MIT WEGMESS-SENSOR**
PISTON-CYLINDER ARRANGEMENT WITH A TRAVEL-MEASURING SENSOR
ENSEMBLE PISTON-CYLINDRE ÉQUIPÉ D'UN CAPTEUR DE MESURE DE COURSE

(30) Priorität: 01.06.2011 DE 102011103799
(43) Veröffentlichungstag der Anmeldung: 09.04.2014
(73) Patentinhaber: Schaeffler Technologies AG & Co. KG, 91074 Herzogenaurach (DE)
(72) Erfinder: KINZIG, Jochen, 76316 Malsch (DE); HERRMANN, Tim, 76461 Muggensturm (DE); GRAMANN, Matthias, 77871 Renchen (DE); HEYD, Jean-Francois, F-67000 Strasburg (FR); WELTER, Roland, 77815 Bühl (DE)
(86) Internationale Anmeldenummer: PCT/DE2012/000478
(87) Internationale Veröffentlichungsnummer: WO 2012/163320

(56) Entgegenhaltungen:
- EP-A1- 1 229 301
- GB-A- 2 260 821
- US-A- 5 767 670

## Beschreibung

Die Erfindung betrifft eine Kolben-Zylinder-Anordnung, insbesondere zur Verwendung in einer Vorrichtung zur Kupplungsbetätigung bei einem Kraftfahrzeug, mit einem Sensor zu Bestimmung der Position des Kolbens in dem Zylinder.

Die EP1229301 offenbart solch einen induktiven Sensor, der mehrere Primärspulen zur Erzeugung eines Magnetfelds und mehrere innerhalb der Primärspule angeordnete Sekundärspulen sowie ein Target umfasst.

Um beispielsweise bei Fahrzeugen mit Stop-Start-Systemen die gewohnte Fahrweise beizubehalten, ist ein frühzeitiges Erkennen des Fahrerwunsches hilfreich. Wegsensoren in beispielsweise Kupplungsgeberzylindern erfüllen diese Anforderung und können zudem noch Zusatzfunktionen übernehmen, welche bisher elektrischen Positionsschaltern, beispielsweise in der Pedalerie, vorbehalten waren. Derartige Sensoren nutzen unter anderem den Hall-Efekt oder werden mit einer oder mehreren außen liegenden Spulen realisiert, in denen durch einen am Kolben befestigten Magneten Spannungen induziert werden. All diesen Systemen ist gemein, dass sie zur Betätigung auf einen Magneten angewiesen sind, der am Kolben befestigt wird. Da für die Herstellung der Magneten erhebliche Kosten entstehen, wurden alternative Möglichkeiten zur Wegmessung in einer Kolben-Zylinder-Anordnung entwickelt.

Eine Alternative sind daher Wegsensoren mit so genannten linear variablen Differentialtransformatoren, bei denen ein leitendes Target an einer Anordnung aus einer Primär- und wenigstens eine Sekundärspule vorbei geführt wird. Mit der Primärspule wird bei einem derartigen LVDT ein Magnetfeld erzeugt, das in den Sekundärspulen eine Spannung induziert. Indem die Sekundärspulen durch Überkreuzen der Leiter in unterschiedliche Schleifen aufgeteilt werden, können über eine entsprechende Verschaltung in den Schleifen der Sekundärspulen jeweils entgegen gerichtete Spannungen erzeugt werden, so dass durch die symmetrisch gegeneinander gerichteten Spannungen die resultierende Spannung in den Sekundärspulen gleich 0 ist. Wird nun ein leitendes Target in das von der Primärspule erzeugte Magnetfeld eingebracht, so verändert sich das Magnetfeld in diesem Spulenbereich und dementsprechend schwankt auch die in den Sekundärspulen in diesem Bereich erzeugte Spannung, so dass die Symmetrie aufgehoben ist und eine resultierende Spannung an den Sekundärspulen gemessen werden kann. Bei entsprechender Abstimmung der Targetgröße und der Schleifen in den Sekundärspulen ist es möglich, eine eindeutige Wegzuordnung des Targets im Magnetfeld der Primärspule durchzuführen. Nachteilig an diesen Wegsensoren ist, dass die aufnehmbare Strecke der Spulenlänge entspricht, so dass zur Aufnahme des gesamten Kolbenwegs ein entsprechend großer Sensor notwendig wird. Dieser ist aufgrund von Bauraumbeschränkungen oft nicht ohne weiteres zu realisieren. Es besteht daher die Aufgabe, einen Wegsensor für eine Kolben-Zylinder-Anordnung zur Verfügung zu stellen, der kostengünstig herzustellen ist, und bei geringerer Sensorlänge eine eindeutige Positionsbestimmung des Kolbens ermöglicht.

Die Lösung dieser Aufgabe gelingt mit einer Kolben-Zylinder-Anordnung gemäß Anspruch 1. Vorteilhafte Weiterbildungen ergeben sich aus den Unteransprüchen.

Eine Kolben-Zylinder-Anordnung gemäß der vorliegenden Erfindung weist einen Kolben auf, der beweglich in einem Zylinder angeordnet ist. Auf dem Kolben finden sich zwei axial voneinander beabstandete Targets, die aus einem elektrisch leitenden Material hergestellt sind. Am Zylinder ist ein Sensor angeordnet, der über wenigstens eine Primärspule und wenigstens zwei Sekundärspulen verfügt. Die Primärspule ist mit einer Stromquelle verbunden, so dass im Inneren der Spule ein Magnetfeld erzeugt wird. Die Sekundärspulen sind im Wesentlichen im Inneren der Primärspule angeordnet. Dabei weisen die Sekundärspulen einzelne Schleifen auf, die durch Überkreuzen der Leiter, aus denen die Spulen aufgebaut sind, gebildet werden.

Zusätzlich weist der Sensor eine Zuordnungsspule auf, die im Inneren der Primärspule angeordnet ist und keine Überkreuzungen aufweist. Damit wird in der Zuordnungsspule durch das Magnetfeld der Primärspule eine Spannung induziert, die entsprechend gemessen werden kann.

Die Targets am Kolben sind dabei aus einem elektrisch leitenden Material hergestellt, wobei die Targets eine unterschiedliche Größe und/oder elektrische Leitfähigkeit aufweisen. Wenn nun bei der Bewegung des Kolbens eines der Targets am Sensor vorbei geführt wird, ändert sich das durch die Zuordnungsspule hindurch tretende Magnetfeld und die induzierte Spannung wird verändert. Da die Beeinflussung des Magnetfelds in der Zuordnungsspule vom im Target induzierten Strom abhängig ist, hängt diese Veränderung von Größe und Leitfähigkeit des Targets ab. Da die beiden Targets hinsichtlich Größe und/oder elektrischer Leitfähigkeit unterschiedlich ausgeführt sind, ergibt sich eine unterschiedliche Beeinflussung des Magnetfelds in der Zuordnungsspule, je nach dem welches Target sich gerade im Magnetfeld der Primärspule befindet. Bei einem Target, das kleiner ist oder eine geringere elektrische Leitfähigkeit aufweist, wird die Veränderung in der induzierten Spannung in der Zuordnungsspule geringer sein als bei einem größeren oder elektrisch leitfähigeren Target. Somit kann mit Hilfe der Zuordnungsspule eindeutig festgestellt werden, welches Target sich im Moment im Magnetfeld des induktiven Sensors befindet.

Die Sekundärspulen weisen mittels Überkreuzung gebildete Schleifen auf, die eine eindeutige Positionszuordnung des im Magnetfeld befindlichen Targets ermöglichen. Dazu weist die erste Sekundärspule eine Schleife auf, die sich über etwa ein Viertel der Sensorlänge erstreckt und am mit überkreuzten Leiterbahnen in die zweite Schleife übergeht, die sich über ungefähr die Hälfte der Sensorlänge erstreckt. Diese zweite Schleife geht dann wieder mit überkreuzten Verbindungsleitern in eine dritte Schleife über, die sich etwa über das restliche Viertel der Sensorlänge erstreckt. Die zweite Sekundärspule weist eine erste Schleife auf, die sich etwa über die erste Hälfte der Sensorlänge erstreckt, und mit überkreuzten Leitern in die zweite Schleife übergeht, sich etwa über die zweite Hälfte der Sensorlänge erstreckt.

Durch die Kombination der Spannungsmessung an den beiden Sekundärpulen und der Zuordnungsspule kann somit eine Positionsmessung der Targets über die Positionslänge des Sensors und eine eindeutige Identifizierung der Targets gewährleistet werden, so dass dementsprechend eine eindeutige Wegmessung auf einer Strecke, die größer ist als die Sensorlänge, möglich ist.

Neitere Vorteile, Merkmale, Merkmalskombinationen und Eigenschaften werden nachfolgend erläutert anhand einer Ausführungsform der Erfindung und den Figuren.
- Figur 1a: ein linear variabler Differenztransformator aus dem Stand der Technik in schematischer Darstellung
- Figur 1b: der linear variable Differenztransformator aus Figur 1a mit einem Target
- Figur 2: eine schematische Darstellung der Zuordnungsspule und der Sekundärspulen eines erfindungsgemäßen linear variablen Differenztransformators
- Figur 3: eine Darstellung der Positionszuordnung mittels den gemessenen Spannungen an den Sekundärspulen und der Zuordnungsspule als Schaubild

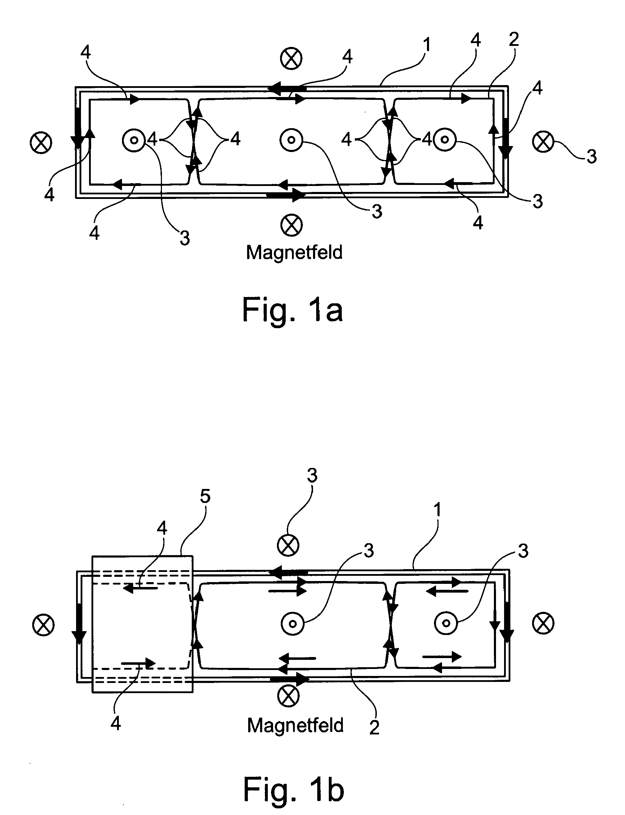

Figur 1 a zeigt einen linear variablen Differenztransformator aus dem Stand der Technik. Ein derartiger linear variabler Differenztransformator weist eine Primärspule 1 und wenigstens eine Sekundärspule 2 auf, die im Wesentlichen die gleiche Fläche bedecken. Die Primärspule ist an eine Spannungsquelle angeschlossen, die ein Magnetfeld 3 erzeugt. Die Richtung der erzeugten Spannung wird durch die Pfeile 4 in der Sekundärspule angedeutet. Wie zu erkennen ist, sind die induzierten Spannungen in den einzelnen Schleifen gegeneinander gerichtet, so dass sich im Ergebnis die Spannungen in der Sekundärspule aufheben.

Wenn nun ein Target 5, wie in Figur 1b gezeigt, in das Magnetfeld der Primärspule 1 gebracht wird, verändert sich das Magnetfeld 3 in diesem Bereich. Die Symmetrie der Spannungen in den einzelnen Schleifen der Sekundärspule 2 ist damit aufgehoben und es kommt zu einer resultierenden Spannung, die abhängig von der Stellung des Targets im Magnetfeld ist. Um eine eindeutige Zuordnung der Position des Targets zu ermöglichen, sind bei linear variablen Differentialtransformatoren nach dem aktuellen Stand der Technik in der Regel zwei Sekundärspulen vorhanden, das Funktionsprinzip ist jedoch das gleiche wie bei dem in Figur 1a und 1 b dargestellt linearen variablen Differenztransformator.

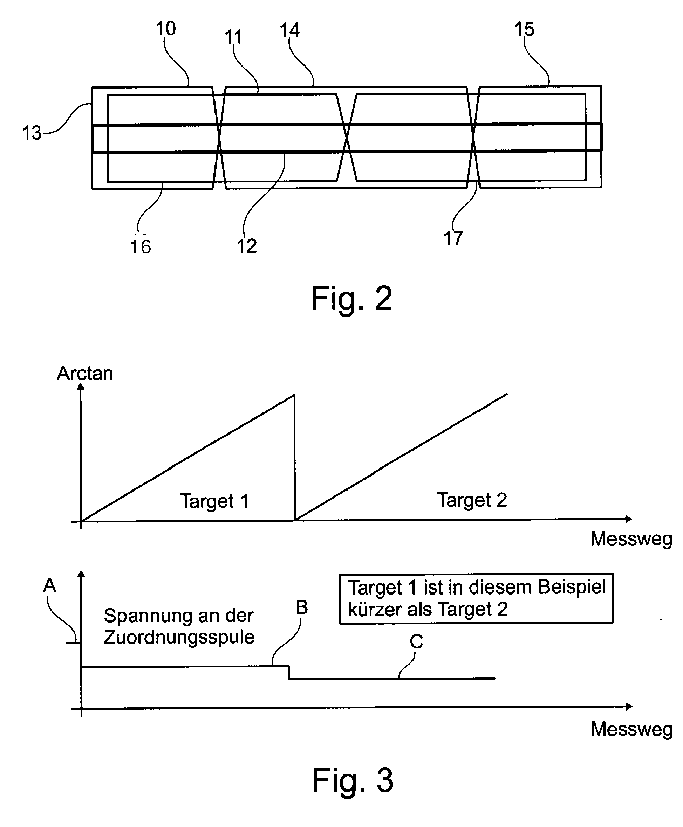

Figur 2 zeigt zwei Sekundärspulen und eine Zuordnungsspule eines linear variablen Differenztransformators gemäß der vorliegenden Erfindung. In einer nicht dargestellten Primäarspule liegen die Sekundärspulen 10 und11, sowie die Zuordnungsspule 12. Die Sekundärspule 10 weißt dabei Schleifen 13, 14 und 15 auf, die jeweils mit überkreuzten Leitern verbunden sind, wobei sich die Schleife 13 etwa über das erste Viertel der Sensorlänge, die Schleife 14 über ein Mittelstück von etwa der Hälfte der Sensorlänge und die Schliefe 15 über das letzte Viertel der Sensorlänge erstreckt. Die Sekundärspule 11 ummfasst zwei Schleifen 16 und 17, die siech jeweils etwa über die Hälfte der Sensorlänge erstrecken und ebenfalls mit überkreuzten Leitern verbunden sind.

Figur 3 zeigt die Messergebnisse, die sich aus der Bewegung der Targets im Magnetfeld des induktiven Wegsensors ergeben. Aus den Messungen der Spannung in den Sekundärspulen, die eine Sinus- bzw. Cosinus-Funktion ergeben, kann mittels Arcus-Tangenz-Bildung eine lineare Funktion, die direkt proportional zum Messweg ist, gebildet werden. Die Spannung an der Zuordnungsspule entwickelt sich wie im darunter liegenden Schaubild dargestellt, von einem Spannungswert A ohne Beeinflussung zu einem Spannungswert B, der niedriger als der Spannungswert A ist und durch die Beeinflussung des Magnetfelds durch das Target 1 verursacht wird, und eine zweiten Spannungswert C, der kleiner als der Spannungswert B ist und durch die Beeinflussung des Magnetfelds durch das Target 2 verursacht wird. Das Target 1 weist in diesem Fall eine längere Länger und somit eine geringere Beeinflussung des Magnetfelds als das Target 2 auf. Grundsätzlich ist aber auch eine umgekehrte Anordnung möglich, ebenso wie die Verwendung von mehr als zwei unterschiedlichen Targets, die dann zu entsprechend mehr Spannungsstufen führen.

### Bezugszeichenliste

- 1: Primärspule
- 2: Sekundärspule
- 3: Magnetfeld
- 4: Pfeile
- 5: Target
- 10: Sekundärspule
- 11: Sekundärspule
- 12: Zuordnugnsspule

- A, B C: Spannungswert

## Patentansprüche

1. Kolben-Zylinder-Anordnung zur Verwendung in einem hydraulischen System zur Kupplungsbetätigung in einem Kraftfahrzeug mit einem Kolben, der axial beweglich in einem Zylinder angeordnet ist, wobei an dem Zylinder ein induktiver Sensor angeordnet ist, der wenigstens eine Primärspule (1) zur Erzeugung eines Magnetfelds und wenigstens zwei innerhalb der Primärspule angeordnete Sekundärspulen ((10), (11)) zur Sensierung der Targetpositionen aufweist, wobei die Spulenachsen senkrecht zur Bewegungsrichtung des Kolbens angeordnet sind und die Sekundärspulen mit gekreuzten Windungen ausgebildet sind, wobei eine erste Sekundärspule (10) so ausgebildet ist, dass eine erste Schleife (13) etwa ein Viertel der Sensorlänge überdeckt, eine zweite daran anschließende Schleife (14) etwa die Hälfte der Sensorlänge überdeckt und eine dritte daran anschließende Schleife (15) etwa das restliche Viertel der Sensorlänge überdeckt, wobei eine zweite Sekundärspule (11) so ausgebildet ist, dass eine erste Schleife (16) etwa die erste Hälfte der Sensorlänge überdeckt und eine zweite Schleife (17) etwa die zweite Hälfte der Sensorlänge überdeckt, **dadurch gekennzeichnet, dass** an dem Kolben wenigstens zwei Targets (5) aus einem elektrisch leitenden Material angeordnet sind, wobei die Targets axial voneinander beabstandet sind und die Targets eine unterschiedliche elektrische Leitfähigkeit und/oder eine unterschiedliche Größe aufweisen, und der Sensor wenigstens eine Zuordnungsspule (12) aufweist, die sich über die gesamte Sensorlänge erstreckt und im Inneren der Primärspule angeordnet ist und keine Überkreuzungen aufweist.

2. Kolben-Zylinder-Anordnung nach Anspruch 1, **dadurch gekennzeichnet, dass** die Targets aus einem Metall, insbesondere Aluminium hergestellt sind.

3. Kolben-Zylinder-Anordnung nach Anspruch 1 oder 2, **dadurch gekennzeichnet, dass** die Targets aus unterschiedlichen Materialien hergestellt sind

4. Kolben-Zylinder-Anordnung nach Anspruch 1, 2 oder 3, **dadurch gekennzeichnet, dass** die Spulen mit mehreren parallelen Windungen ausgebildet sind.

## Claims

1. Piston-cylinder assembly for use in a hydraulic system for activing a clutch in a motor vehicle with a piston which is assigned in an axially movable fashion in a cylinder, wherein an inductive sensor is arranged on the cylinder, said inductive sensor having at least one primary coil (1) for generating a magnetic field and at least two secondary coils ((10), (11)) which are arranged within the primary coil and have the purpose of sensing the target positions, wherein the coil axes are arranged perpendicularly with respect to the direction of movement of the piston, and the secondary coils are embodied with crossed windings, wherein a first secondary coil (10) is embodied in such a way that a first loop (13) covers approximately a quarter of the sensor length,
a second loop (14) adjoining said first loop (13) covers approximately half the sensor length,
and a third loop (15) adjoining said second loop (14) covers approximately the remaining quarter of the sensor length wherein a second secondary coil (11) is embodied in such a way that a first loop (16) covers approximately the first half of the sensor length and a second loop (17) covers approximately the second half of the sensor length, **characterized in that** at least two targets (5) composed of an electrically conductive material are arranged on the piston, wherein the targets are spaced apart axially from one another, and the targets have different electrical conductivity and/or different magnitudes, and the sensor has at least one assignment coil (12) which extends over the entire sensor length, is arranged in the interior of the primary coil and does not have any crossovers.

2. Piston-cylinder assembly according to Claim 1, **characterized in that** the targets are manufactured from a metal, in particular aluminium.

3. Piston-cylinder assembly according to Claim 1 or 2, **characterized in that** the targets are manufactured from different materials.

4. Piston-cylinder assembly according to Claim 1, 2 or 3, **characterized in that** the coils are embodied with a plurality of parallel windings.

## Revendications

1. Agencement cylindre-piston pour l'utilisation dans un système hydraulique pour l'actionnement de l'embrayage dans un véhicule automobile, comprenant un piston, qui est déplaçable axialement dans un cylindre, un capteur inductif étant disposé au niveau du cylindre, lequel présente au moins une bobine primaire (1) pour générer un champ magnétique et au moins deux bobines secondaires ((10), (11)) disposées à l'intérieur de la bobine primaire pour détecter des positions cibles, les axes de bobine étant disposés perpendiculairement au sens de déplacement du piston et les bobines secondaires étant réalisées avec des enroulements croisés, une première bobine secondaire (10) étant réalisée de telle sorte qu'une première boucle (13) recouvre approximativement un quart de la longueur du capteur, une deuxième boucle (14) s'y raccordant recouvre approximativement la moitié de la longueur du capteur, et une troisième boucle (15) s'y raccordant recouvre approximativement le quart restant de la longueur du capteur, une deuxième bobine secondaire (11) étant réalisée de telle sorte qu'une première boucle (16) recouvre approximativement la première moitié de la longueur du capteur et qu'une deuxième boucle (17) recouvre approximativement la deuxième moitié de la longueur du capteur, **caractérisé en ce qu'**au moins deux cibles (5) en matériau électriquement conducteur sont disposées sur le piston, les cibles étant espacées axialement l'une de l'autre et les cibles présentant une conductibilité électrique différente et/ou une taille différente, et le capteur présentant au moins une bobine d'attribution (12) qui s'étend sur toute la longueur du capteur et qui est disposée à l'intérieur de la bobine primaire et ne présente aucun croisement.

2. Agencement cylindre-piston selon la revendication 1, **caractérisé en ce que** les cibles sont fabriquées en métal, en particulier en aluminium.

3. Agencement cylindre-piston selon la revendication 1 ou 2, **caractérisé en ce que** les cibles sont fabriquées en matériaux différents.

4. Agencement cylindre-piston selon la revendication 1, 2 ou 3, **caractérisé en ce que** les bobines sont réalisées avec plusieurs enroulements parallèles.
